# EUROPÄISCHE PATENTSCHRIFT

(11) **EP 3 390 191 B1**
(45) Veröffentlichungstag und Bekanntmachung des Hinweises auf die Patenterteilung: **16.03.2022**
(21) Anmeldenummer: 16815751.9
(22) Anmeldetag: 02.12.2016
(51) Int. Cl.: B60W 50/16, B60R 21/013

(54) **VERFAHREN ZUR ERZEUGUNG EINER HAPTISCHEN SIGNALISIERUNG AN EINEM MANUELLEN STEUERMITTEL EINES FAHRZEUGS**
METHOD FOR GENERATING A HAPTIC SIGNAL ON A MANUAL CONTROL MEANS OF A VEHICLE
PROCÉDÉ PERMETTANT DE PRODUIRE UNE SIGNALISATION HAPTIQUE SUR UN MOYEN DE COMMANDE MANUEL D'UN VÉHICULE

(30) Priorität: 18.12.2015 DE 102015226046
(43) Veröffentlichungstag der Anmeldung: 24.10.2018
(73) Patentinhaber: Bayerische Motoren Werke Aktiengesellschaft, 80809 München (DE)
(72) Erfinder: AUGST, Alexander, 80937 Muenchen (DE); SCHILLING, David, 80937 München (DE)
(86) Internationale Anmeldenummer: PCT/EP2016/079631
(87) Internationale Veröffentlichungsnummer: WO 2017/102387

(56) Entgegenhaltungen:
- EP-A2- 1 142 746
- DE-A1-102010 019 519
- DE-A1-102010 025 704
- DE-A1-102014 201 037

## Beschreibung

Die Erfindung betrifft ein Verfahren, eine Vorrichtung oder ein Computerprodukt zur Erzeugung einer haptischen Signalisierung an einem manuellen Steuermittel eines Fahrzeugs, wobei die haptische Signalisierung insbesondere zur Unterstützung eines Fahrers eines Fahrzeugs bei der Führung des Fahrzeugs erzeugt wird.

Ein Fahrzeug weist heute meist eine Vielzahl von Fahrerassistenzsystemen auf, die den Fahrer des Fahrzeugs bei der Führung des Fahrzeugs unterstützen. Einige Fahrerassistenzsysteme nutzen dabei das Lenkrad des Fahrzeugs, das der Fahrer bei der Führung des Fahrzeugs berührt, um Information an den Fahrer zu signalisieren (z.B. einen Hinweis darauf, dass die aktuelle Fahrspur verlassen wird). DE 10 2014 201 037 A1 beschreibt z.B. die Ausgabe von haptischer Information über das Lenkrad eines Fahrzeugs, um den Fahrer des Fahrzeugs über den Zustand einer aktuell befahrenen Straße zu informieren.

Es können somit haptisch wahrnehmbare Maßnahmen bzw. Signalisierungen am Lenkrad durchgeführt werden, um den Fahrer des Fahrzeugs bei der Führung des Fahrzeugs zu unterstützen.

Einhergehend mit der Zunahme der Bedeutung von Fahrerassistenzsystemen und diverser teils sicherheitsrelevanter automatisierter Eingriffe in die Führung eines Fahrzeugs steigen auch die Anforderungen an eine sichere, sowie leicht und eindeutig interpretierbare Signalisierung an den Fahrer des Fahrzeugs.

Eine sichere Signalisierung für alle Fahrsituationen erfordert dabei typischerweise eine erheblich starke Einwirkung auf die Wahrnehmung des Fahrers, was wiederum unkomfortabel sein kann und z.B. für bestimmte Fahrzeuge ungeeignet ist.

Das vorliegende Dokument befasst sich mit der technischen Aufgabe, ein Verfahren, eine entsprechende Vorrichtung bzw. ein Computerprodukt bereitzustellen, um eine verbesserte haptische Signalisierung an einem Steuermittel, insbesondere an einem Lenkrad, eines Fahrzeugs zu ermöglichen. Die Aufgabe wird durch die unabhängigen Ansprüche gelöst. Vorteilhafte Ausführungsformen werden u.a. in den abhängigen Ansprüchen beschrieben. Gemäß einem Aspekt wird ein Verfahren zur Erzeugung einer haptischen Signalisierung in einem Fahrzeug beschrieben. Die haptische Signalisierung kann insbesondere dazu generiert werden, um einen Fahrer des Fahrzeugs zu warnen oder um dem Fahrer des Fahrzeugs einen Hinweis bzw. eine Anweisung zu geben. Die haptische Signalisierung kann z.B. erzeugt werden, wenn detektiert wurde, dass das Fahrzeug z.B. eine aktuelle Fahrspur verlässt oder eine Kollisionsgefahr mit einem Hindernis, z.B. von einer bestimmten Seite, ansteigt bzw. ein vorausbestimmtes Maß übersteigt.

Die haptische Signalisierung wird dabei an einem manuellen Steuermittel erzeugt, insbesondere an einem Lenkrad, mit dem der Fahrer das Fahrzeug steuert. Insbesondere kann der Fahrer des Fahrzeugs das manuelle Steuermittel berühren und bewegen, um eine Querführung des Fahrzeugs (Vorderrad- und/oder Hinterradlenkung) zu steuern. Die haptische Signalisierung kann eine Vibration und/oder eine kurzzeitige (variable) Krafteinwirkung, insbesondere ein Drehmoment an dem manuellen Steuermittel umfassen.

Das Verfahren umfasst das Ermitteln von Vibrationsinformation, die ein Maß von Vibrationen im Fahrzeug, insbesondere an dem manuellen Steuermittel des Fahrzeugs, anzeigt. Dabei kann die Vibrationsinformation insbesondere (ein Maß von) Vibrationen im Fahrzeug anzeigen, die nicht von der haptischen Signalisierung hervorgerufen wurden. Typischerweise ist die Vibrationsinformation bzw. das Maß von Vibrationen im Fahrzeug von Unebenheiten einer von dem Fahrzeug (aktuell und/oder zukünftig) befahrenen Fahrbahn abhängig.

Die Vibrationsinformation kann insbesondere ermittelt werden, basierend auf: Information über die Qualität der (aktuell oder zukünftig befahrenen) Fahrbahn aus einer digitalen Navigationskarte; Sensordaten eines Umfeldsensors des Fahrzeugs, der eingerichtet ist, eine von dem Fahrzeug (aktuell oder zukünftig) befahrenen Fahrbahn zu erfassen; Sensordaten eines vertikaldynamischen Sensors des Fahrzeugs; Sensordaten eines Inertialsensors und/oder Beschleunigungssensors des Fahrzeugs; und/oder Sensordaten eines Bewegungs- und/oder Kraftsensors an den manuellen Steuermitteln des Fahrzeugs.

Beim Ermitteln dieser Art von Vibrationen kann auch ein Maß der Dämpfung bzw. der Weitergabe der an den Rädern des Fahrzeugs entstehenden Vibrationen durch das Fahrwerk des Fahrzeugs, insbesondere durch einen Lenkstrang des Fahrzeugs, berücksichtigt werden.

Das Verfahren umfasst weiter das Erzeugen einer haptischen Signalisierung an einem manuellen Steuermittel, insbesondere an einem Lenkrad, des Fahrzeugs in Abhängigkeit von der Vibrationsinformation. Insbesondere kann eine auszugebende (z.B. von einer Funktion bzw. Vorrichtung des Fahrzeugs angeforderte) haptische Signalisierung in Abhängigkeit von der Vibrationsinformation angepasst werden.

Die haptische Signalisierung kann z.B. eine Vibration umfassen, die an dem manuellen Steuermittel erzeugt wird, und damit von dem Fahrer des Fahrzeugs wahrgenommen werden kann. Durch die Anpassung der haptischen Signalisierung kann gewährleistet werden, dass die haptische Signalisierung auch bei starken Vibrationen im Fahrzeug (insbesondere bei starken anderweitigen Vibrationen am manuellen Steuermittel) zuverlässig wahrgenommen werden kann. Andererseits kann durch die Anpassung der haptischen Signalisierung eine Störung des Fahrers bzw. eines anderen Insassen aufgrund der haptischen Signalisierung vermieden werden.

Bevorzugt werden dabei Vibrationen im einen Frequenzbereich von 0,1 - 1000 Hz, insbesondere von 0,5 - 300 Hz, berücksichtigt. Dabei handelt es sich um die für Kraftfahrzeuge typischen Vibrationen, die einen erheblichen Einfluss auf einen menschlichen Wahrnehmungskanal bei der Wahrnehmung haptischer Reize aufweisen können.

Insbesondere kann es sich bei der haptischen Signalisierung um eine zeitlich variable gerichtete Krafteinwirkung, insbesondere um ein gerichtetes, zeitlich variables Drehmoment, handeln. Dabei kann das Drehmoment zu einer haptischen Signalisierung entsprechend einer vorausbestimmten zeitlichen Funktion, insbesondere asymmetrisch für die Lenkrichtungen links und rechts, erzeugt werden. Die haptische Signalisierung kann dabei auch eine oder mehrere im Wesentlichen konstante oder langsam veränderliche Krafteinwirkung bzw. ein konstantes oder langsam veränderliches Drehmoment umfassen oder mit solchen kombiniert werden.

Dabei kann auch die Richtung und/oder Frequenz und/oder Amplitude der Krafteinwirkung eine bestimmte Information für den Fahrer des Fahrzeugs, insbesondere über seinen haptischen Wahrnehmungskanal, übermitteln.

Bevorzugt handelt es sich bei der haptischen Signalisierung um eine Lenkradvibration und/oder ein gerichtetes Drehmoment des Lenkrads des Fahrzeugs. Eine solche haptische Signalisierung kann beispielsweise mittels der Aktoren einer Servolenkung und/oder durch einen weiteren Aktor, z.B. einen Umwucht-Aktor, z.B. innerhalb des manuellen Steuermittels, erzeugt werden.

Die haptische Signalisierung kann z.B. zumindest eine wesentliche Frequenzkomponente in einem Frequenzbereich von 1 - 40 Hz, bevorzugt 12 - 30 Hz, aufweisen. Eine solche haptische Information kann vom Fahrer des Fahrzeugs besonders schnell, z.B. über seine Hände am Lenkrad, wahrgenommen werden. Durch das Erzeugen der haptischen Information an einem manuellen Steuermittel eines Fahrzeugs kann eine derart zu dem Fahrer übermittelte Information besonders schnell intuitiv durch den Fahrer des Fahrzeugs "begriffen" und ggf. in eine Handlung umgesetzt werden.

Bevorzugt handelt es sich bei der zu signalisierenden Information um eine abhängig von einem Fahrerassistenzsystem bzw. von einem System aktiver Sicherheit ausgegebenen Fahrerinformation. Besonders bevorzugt handelt es sich dabei um eine Information zur Unterstützung des Fahrers bei der Führung des Fahrzeugs, insbesondere einer Querführung des Fahrzeugs. Bevorzugt kann eine solche Information abhängig von einer mit Mitteln des Fahrzeugs erfassten und interpretierten Umfeldinformation erzeugt werden. Eine solche haptische Information kann dabei eine oder mehrere unterschiedliche Warnungen, Handlungsempfehlungen oder sonstige Informationen an den Fahrer des Fahrzeugs übermitteln bzw. repräsentieren.

Eine haptische Information kann eine Information zur Position des Fahrzeugs in Relation zu Spurenmarkierungen und/oder beweglichen oder unbeweglichen Hindernissen in der Umgebung des Fahrzeugs repräsentieren. Ferner kann zumindest ein Parameter der haptischen Information ein Maß für die Kritikabilität einer Information repräsentieren.

Ein manuelles Steuermittel kann bevorzugt ein Steuermittel zur Lenkung des Fahrzeugs (Lenkrad eines Kraftfahrzeugs, Lenker eines Motorrads oder eine vergleichbare Vorrichtung) sein. Ferner kann das manuelle Steuermittel auch ein Pedal des Fahrzeugs, z.B. ein Fahr- und/oder Bremspedal des Fahrzeugs sein. In diesem Zusammenhang kann die haptische Information beispielsweise als eine Vibrations- oder Kraftsignalisierung des Pedals an den Fuß des Fahrers aufgefasst werden.

Ferner kann das manuelle Steuermittel auch ein kombiniertes Steuermittel zur Steuerung der Fahrzeug-Querführung und/oder der Fahrzeug-Längsführung und/oder zur Manöversteuerung durch den Fahrer sein, wie z.B. ein "Joystick" oder eine sinngemäße Weiterbildung.

Die haptische Signalisierung kann ein oder mehrere Frequenzkomponenten mit einer jeweiligen Amplitude und einer jeweiligen Frequenz umfassen. Die Amplitude und/oder Frequenz der ein oder mehreren Frequenzkomponenten der haptischen Signalisierung können dann in Abhängigkeit von der Vibrationsinformation angepasst werden. Insbesondere kann bewirkt werden, dass die haptische Signalisierung zumindest eine Frequenzkomponente mit einer bestimmten Frequenz umfasst, die eine Amplitude aufweist, die höher als die Amplitude einer Frequenzkomponente mit der bestimmten Frequenz der Vibrationen des Fahrzeugs. Mit anderen Worten, die spektrale Energie der haptischen Signalsierung kann in Frequenzbereiche verschoben werden, in denen die Vibrationen im Fahrzeug relativ wenig spektrale Energie aufweist.

Besonders bevorzugt umfasst das Verfahren eine Verschiebung einer spektralen Energie der haptischen Signalsierung von einem oder mehreren Frequenzbereichen, in denen die Vibrationen im Fahrzeug eine relativ hohe spektrale Energie aufweisen (und somit einen erhöhten störenden Einfluss auf die haptische Signalisierung ausüben können) in einen oder mehrere Frequenzbereiche, in denen die Vibrationen im Fahrzeug relativ wenig spektrale Energie aufweisen. Dabei kann das Verfahren abhängig von der ermittelten Vibrationsinformation auch eine Verteilung der haptischen Signalisierung z.B. auf zumindest zwei unterschiedliche Frequenzbereiche umfassen.

Insbesondere kann die haptische Signalisierung derart angepasst werden, dass die haptische Signalisierung in einem bestimmten Frequenzbereich eine für Menschen wahrnehmbar höhere spektrale Energie aufweist als die Vibrationen im Fahrzeug. Alternativ oder zusätzlich kann eine Korrelation zwischen dem Frequenzspektrum der haptischen Signalisierung und der Vibrationen des Fahrzeugs reduziert, ggf. minimiert, werden. So kann gewährleistet werden, dass die haptische Signalisierung zuverlässig vom Fahrer des Fahrzeugs wahrgenommen werden kann.

Das Verfahren kann umfassen, das Ermitteln einer aktuellen und/oder prädizierten Fahrgeschwindigkeit des Fahrzeugs. Die Vibrationsinformation kann dann von der aktuellen und/oder prädizierten Fahrgeschwindigkeit des Fahrzeugs abhängig sein bzw. die Vibrationsinformation kann die aktuelle und/oder prädizierte Fahrgeschwindigkeit des Fahrzeugs umfassen. Die haptische Signalisierung kann dann in Abhängigkeit von der Fahrgeschwindigkeit erzeugt bzw. angepasst werden. Insbesondere kann eine spektrale Zusammensetzung der haptischen Signalisierung von der Fahrgeschwindigkeit abhängen. So kann gewährleistet werden, dass die haptische Signalisierung auch bei unterschiedlichen Fahrgeschwindigkeiten in zuverlässiger Weise von einem Fahrer wahrgenommen werden kann.

Eine Intensität und/oder eine Amplitude der haptischen Signalisierung können mit einem steigenden Maß von Unebenheiten der befahrenen Fahrbahn steigen. Alternativ oder ergänzend können eine Intensität und/oder eine Amplitude der haptischen Signalisierung mit steigender Fahrgeschwindigkeit steigen. Alternativ oder ergänzend können eine Intensität und/oder eine Amplitude der haptischen Signalisierung mit einem Kombinationswert (z.B. mit einem Produkt) aus dem Maß von Unebenheiten und der Fahrgeschwindigkeit steigen. So kann gewährleistet werden, dass die haptische Signalisierung auch bei unterschiedlichen Fahrsituationen in zuverlässiger Weise von einem Fahrer wahrgenommen werden kann.

Die Vibrationsinformation kann ein aktuelles Maß von Vibrationen des Fahrzeugs und eine prädizierte zukünftige Veränderung des Maßes von Vibrationen des Fahrzeugs anzeigen. Dabei kann die prädizierte zukünftige Veränderung des Maßes von Vibrationen des Fahrzeugs insbesondere von einer geplanten Trajektorie des Fahrzeugs abhängen. So kann die haptische Signalisierung bereits im Vorfeld angepasst werden, so dass die Zuverlässigkeit der Wahrnehmung weiter erhöht wird.

Die Vibrationsinformation kann auch abhängig von akustischen Signalen, insbesondere von einem Pegel von akustischen Signalen, in einem Innenraum des Fahrzeugs ermittelt werden. Beispielsweise können mittels eines Innenraum-Mikrofons akustische Signale im Innenraum des Fahrzeugs erfasst werden. Des Weiteren kann die spektrale Energie eines akustischen Signals in einem, für Vibrationen relevanten, Frequenzbereich (z.B. von 100Hz, 50Hz oder weniger) ermittelt werden. Die haptische Signalisierung kann dann in Abhängigkeit von der Information in Bezug auf das akustische Signal angepasst werden. So können weitere Vibrationsquellen berücksichtigt werden, um die Qualität der Wahrnehmung der haptischen Signalisierung zu verbessern.

Die haptische Signalisierung kann in einem vorausliegenden (d.h. in der Zukunft liegenden) Zeitintervall ausgegeben werden. Das Ermitteln von Vibrationsinformation kann umfassen, das Ermitteln von Vibrationsinformation für zumindest einen Teil des vorausliegenden Zeitintervalls. Somit kann bereits im Vorfeld eine Anpassung der haptischen Signalisierung vorgenommen werden, so dass die Qualität der Wahrnehmung der haptischen Signalisierung weiter verbessert werden kann.

Die haptische Signalsierung kann derart erzeugt bzw. angepasst werden, dass die haptische Signalsierung eine erste Wahrnehmbarkeitsschelle für einen Fahrer des Fahrzeugs überschreitet, wobei der Fahrer die manuellen Steuermittel berührt. Alternativ oder ergänzend kann die haptische Signalsierung derart erzeugt bzw. angepasst werden, dass die haptische Signalsierung eine zweite Wahrnehmbarkeitsschelle für einen weiteren Insassen des Fahrzeugs unterschreitet, der die manuellen Steuermittel nicht berührt. Die erste Wahrnehmbarkeitsschwelle und die zweite Wahrnehmbarkeitsschelle können dabei von der Vibrationsinformation abhängen. Beispielsweise können Kennfelder für Wahrnehmbarkeitsschellen ermittelt werden (z.B. anhand von psychohaptischen Tests), die die erste und/oder zweite Wahrnehmbarkeitsschwelle als Funktion der Vibrationsinformation anzeigen. Es können dann für die aktuelle Vibrationsinformation die aktuelle erste und aktuelle zweite Wahrnehmbarkeitsschelle ermittelt werden. So können die Wahrnehmbarkeit und/oder der Komfort weiter erhöht werden.

Die Vibrationsinformation kann einen zeitlichen Verlauf einer Amplitude und/oder einer Frequenz von Vibrationen im Fahrzeug anzeigen. Ein zeitlicher Verlauf einer Amplitude und/oder einer Frequenz der haptischen Signalisierung kann dann in Abhängigkeit von der Vibrationsinformation angepasst werden. Insbesondere kann bewirkt werden, dass eine Korrelation zwischen dem zeitlichen Verlauf der Vibrationen im Fahrzeug und dem zeitlichen Verlauf der haptischen Signalisierung reduziert, ggf. minimiert, wird. So kann die Qualität der Wahrnehmung der haptischen Signalisierung weiter verbessert werden.

Ferner kann das Verfahren das Erzeugen von zumindest zwei unterschiedlichen haptischen Signalisierungen umfassen, wobei die zumindest zwei haptischen Signalisierungen unterschiedliche Informationen (Botschaften) an den Fahrer des Fahrzeugs über zumindest ein Steuermittel des Fahrzeugs übermitteln.

Dabei kann das Erzeugen von zumindest zwei unterschiedlichen haptischen Signalisierungen mit unterschiedlicher Bedeutung in einem unterschiedlichen Maße abhängig von der ermittelten Vibrationsinformation sein bzw. bei Veränderung der Vibrationsinformation angepasst werden.

Daher kann mit dem Verfahren eine haptische Signalisierung erzeugt werden, bei der eine Information für den Fahrer des Fahrzeugs komfortabler und sicherer übermittelbar ist. Ferner kann eine bessere (klare) Unterscheidbarkeit von zumindest zwei unterschiedlichen haptischen Informationen oder von zumindest zwei unterschiedlichen Maßen von Kritikabilität einer Information durch den Fahrer in unterschiedlichen Situationen sichergestellt werden.

Beispielsweise kann dabei zumindest eine erste haptische Signalisierung zum Repräsentieren einer nicht oder weniger sicherheitsrelevanten Information und eine zweite haptische Signalisierung zum Repräsentieren einer sicherheitskritischen Information erzeugt werden. Dabei kann die erste nicht sicherheitskritische Signalisierung derart abhängig von der ermittelten Vibrationsinformation erzeugt werden, dass keine unkomfortable Einwirkung auf die Wahrnehmung des Fahrers erfolgt. Dabei kann die zweite sicherheitskritische Signalisierung derart abhängig von der ermittelten Vibrationsinformation erzeugt werden, dass diese mit einer hohen Wahrscheinlichkeit wahrgenommen wird und/oder von der ersten Signalisierung sicher unterscheidbar sein wird.

Gemäß einem weiteren Aspekt wird eine Vorrichtung für ein Fahrzeug beschrieben. Die Vorrichtung ist eingerichtet, Vibrationsinformation zu ermitteln, die ein Maß von Vibrationen im Fahrzeug anzeigt. Außerdem ist die Vorrichtung eingerichtet, zu veranlassen, dass in Abhängigkeit von der Vibrationsinformation eine haptische Signalisierung an einem manuellen Steuermittel des Fahrzeugs, insbesondere an einem Lenkrad, erzeugt bzw. angepasst wird.

Gemäß einem weiteren Aspekt wird ein Fahrzeug (insbesondere ein Straßenkraftfahrzeug z.B. ein Personenkraftwagen, ein Lastkraftwagen oder ein Motorrad) beschrieben, das die in diesem Dokument beschriebene Vorrichtung umfasst.

Gemäß einem weiteren Aspekt wird ein Computerprogramm, insbesondere ein Computerprogrammprodukt, beschrieben. Das Computerprogramm kann ggf. direkt in den internen Speicher einer digitalen Vorrichtung (insbesondere einer elektronischen Steuereinheit eines Fahrerassistenzsystems in einem Fahrzeug mit einer Recheneinheit) geladen werden. Desweiteren kann das Computerprogramm Softwarecodeabschnitte umfassen, mit denen die Schritte des Verfahrens gemäß einem der beschriebenen Verfahrensansprüche ausgeführt werden, wenn das Computerprodukt auf der digitalen Vorrichtung läuft.

Bei dem Fahrzeug handelt es sich insbesondere um ein Kraftfahrzeug oder Zweirad, z.B. Motorrad. Daraus resultieren zahlreiche hier diskutierte und weitere von einem Fachmann unschwer nachvollziehbare Vorteile. Alternativ kann das Verfahren auch auf Luftfahrzeuge oder Wasserfahrzeuge angewandt werden.

Es ist zu beachten, dass die in diesem Dokument beschriebenen Verfahren, Vorrichtungen und Systeme sowohl alleine, als auch in Kombination mit anderen in diesem Dokument beschriebenen Verfahren, Vorrichtungen und Systemen verwendet werden können. Desweiteren können jegliche Aspekte der in diesem Dokument beschriebenen Verfahren, Vorrichtungen und Systemen in vielfältiger Weise miteinander kombiniert werden. Insbesondere können die Merkmale der Ansprüche in vielfältiger Weise miteinander kombiniert werden.

Im Weiteren wird die Erfindung anhand von Ausführungsbeispielen näher beschrieben. Dabei zeigen
Figur 1 beispielhafte Komponenten eines Fahrzeugs; und
Figur 2 ein Ablaufdiagramm eines beispielhaften Verfahrens zur Erzeugung einer Lenkradsignalisierung.

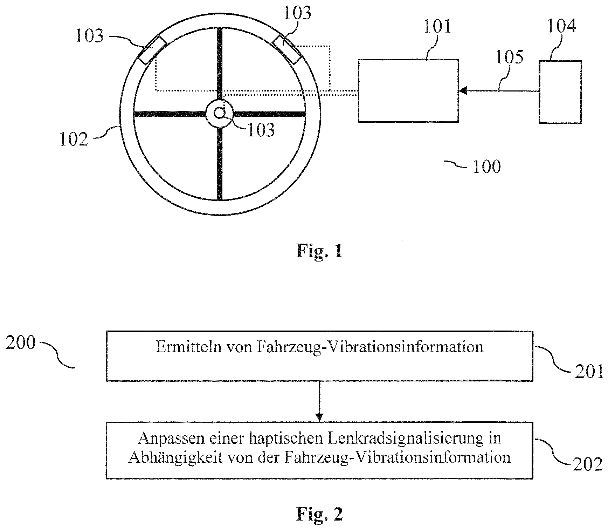

Wie eingangs dargelegt, befasst sich das vorliegende Dokument mit der zuverlässigen Signalisierung von Information an einen Fahrer eines Fahrzeugs über manuelle Steuermittel (insbesondere über ein Lenkrad) des Fahrzeugs. In diesem Zusammenhang zeigt Fig. 1 beispielhafte Komponenten eines Fahrzeugs 100. Insbesondere zeigt Fig. 1 ein Lenkrad 102 eines Fahrzeugs 100, mit dem der Fahrer des Fahrzeugs 100 die Querführung des Fahrzeugs 100 steuern kann. Das Lenkrad 102 kann dabei als ein Beispiel für ein manuelles Steuermittel des Fahrzeugs 100 betrachtet werden. Alternativ oder ergänzend könnte z.B. ein Steuerknüppel als manuelles Steuermittel verwendet werden, um das Fahrzeug 100 zu führen.

Das Lenkrad 102 umfasst ein oder mehrere haptische Aktuatoren 103, die eingerichtet sind, ein haptisch wahrnehmbares Signal (insbesondere eine Vibration) am Lenkrad 102 zu generieren, so dass das Signal durch eine Hand des Fahrers des Fahrzeugs 100 erfasst werden kann. Die ein oder mehreren haptischen Aktuatoren 103 können durch eine Steuereinheit 101 des Fahrzeugs 100 angesteuert werden. Beispielsweise können die ein oder mehreren Aktuatoren 103 angesteuert werden, um dem Fahrer des Fahrzeugs 100 zu signalisieren, dass das Fahrzeug 100 eine aktuelle Fahrspur verlässt. Anhand der Aktuatoren 103 können insbesondere Lenkradvibrationen zur Signalisierung von Informationen oder Warnungen von unterschiedlichen Fahrerassistenzsystemen generiert werden. Dabei können die Lenkradvibrationen mit Umwucht-Aktuatoren 103 im Lenkrad 102 oder mit einem Servolenkungs-Aktuator 103 erzeugt werden. Die Stärke der Lenkradvibrationen kann ggf. in einem Menü einer Nutzerschnittstelle des Fahrzeugs 100 eingestellt werden (z.B. in 3 Stufen).

Bei einer unebenen bzw. schlechten Fahrbahn kann es vorkommen, dass eine Lenkradvibration unbemerkt bleibt. Als Folge daraus können ggf. Warnungen und/oder Empfehlungen eines Fahrerassistenzsystems nicht vom Fahrer des Fahrzeugs 100 erfasst werden. Andererseits können auf einer sehr ebenen Fahrbahn (relativ starke) Lenkradvibrationen als störend von dem Fahrer des Fahrzeugs 100 empfunden werden. Des Weiteren können in solchen Situationen Lenkradvibrationen auch von einem anderen Insassen des Fahrzeugs 100 als störend wahrgenommen werden. Es wird daher eine adaptive Anpassung der haptischen Signalisierung eines manuellen Steuermittels 102 eines Fahrzeugs 100 beschrieben. Dabei kann die haptische Signalisierung anhängig von einem oder mehreren Faktoren erfolgen, die eine menschliche Wahrnehmung der haptischen Signalisierung beeinflussen.

Insbesondere kann das Fahrzeug 100 einen Sensor 104 umfassen, der eingerichtet ist, Vibrationsinformation 105 in Bezug auf Vibrationen des Fahrzeugs 100 (insbesondere in Bezug auf Vibrationen am manuellen Steuermittel 102 des Fahrzeugs 100) zu erfassen. Die Vibrationsinformation 105 kann Information in Bezug auf ein Maß an Vibrationen im Fahrzeug 100 anzeigen. Die Steuereinheit 101 kann eingerichtet sein, die Aktuatoren 103 des manuellen Steuermittels 102 in Abhängigkeit von der Vibrationsinformation 105 anzusteuern. Insbesondere kann die Stärke der durch einen Aktuator 103 generierten Signalisierung erhöht werden, wenn die Vibrationsinformation 105 ein relativ hohes Maß an Vibrationen im Fahrzeug 100 (insbesondere am manuellen Steuermittel 102) anzeigt. Andererseits kann die Stärke der durch einen Aktuator 103 generierten Signalisierung reduziert werden, wenn die Vibrationsinformation 105 ein relativ niedriges Maß an Vibrationen im Fahrzeug 100 (insbesondere am manuellen Steuermittel 102) anzeigt. So kann gewährleistet werden, dass eine haptische Signalisierung über ein manuelles Steuermittel 102 eines Fahrzeugs 100 in zuverlässiger und komfortabler Weise durch einen Fahrer des Fahrzeugs 100 erfasst werden kann.

Fig. 2 zeigt ein Ablaufdiagramm eines beispielhaften Verfahrens 200 zur Erzeugung einer haptischen Signalisierung in einem Fahrzeug 100. Das Verfahren 200 umfasst das Ermitteln 201 von Vibrationsinformation 105, die ein Maß von Vibrationen im Fahrzeug 100 anzeigt. Außerdem umfasst das Verfahren 200 das Erzeugen bzw. das Anpassen 202 einer haptischen Signalisierung an einem manuellen Steuermittel 102, insbesondere an einem Lenkrad, des Fahrzeugs 100 in Abhängigkeit von der Vibrationsinformation 105.

In diesem Dokument wird somit ein Verfahren 200 zur adaptiven haptischen Lenkradsignalisierung beschrieben, bei dem die haptische Lenkradsignalisierung abhängig von einer Information 105, die das Maß von Vibrationen im Fahrzeug 100 zum Zeitintervall der Ausgabe der haptischen Lenkradsignalisierung repräsentiert, variiert wird. Die haptische Lenkradsignalisierung kann insbesondere eine warnende oder informierende Vibration umfassen, die z.B. abhängig von einer möglichen Überschreitung einer Fahrbahnmarkierung oder anhängig von einer (Seiten-)Kollisionsgefahr erzeugt wird. Des Weiteren kann die haptische Lenkradsignalisierung eine gerichtete Lenkradvibration umfassen, bei der sich eine Krafteinwirkung und/oder ein Widerstand in eine erste Lenkrichtung und in eine zweite Lenkrichtung unterscheiden. Dabei kann die erste und/oder die zweite Richtung eine Information über eine empfohlene oder nicht empfohlene Lenkrichtung an den Fahrer übermitteln.

Die über die Vibrationsinformation 105 erfassten Vibrationen im Fahrzeug 100 können insbesondere Vibrationen umfassen, die am Lenkrad 102 des Fahrzeugs 100 vorliegen (und die unabhängig von den durch die Aktuatoren 103 erzeugten Vibrationen sind). Die Vibrationen können insbesondere Vibrationen im Frequenzbereich von 0,5 - 50 Hz umfassen. Die Vibrationen im Fahrzeug 100 können Vibrationen umfassen, die durch den Lenkstrang von Fahrbahnunebenheiten an das Lenkrad 102 übertragen werden.

Besonders bevorzugt kann das Maß an Vibrationen im Fahrzeug 100 einen Amplitudenwert und/oder einen Frequenzwert und/oder einen kumulierten Wahrnehmungswert umfassen. Das Maß an Vibrationen kann dabei für ein Zeitintervall in der nahen Zukunft vorausermittelt bzw. geschätzt werden. Ein vorausermitteltes bzw. geschätztes Maß für Vibrationen im Fahrzeug 100 zum Zeitintervall der Ausgabe einer haptischen Signalisierung kann dabei auch vom aktuellen (bzw. aktuell gemessenen) Maß an Vibration abhängen. Insbesondere kann das vorausermittelte Maß an Vibrationen im Fahrzeug 100 dem aktuellen (bzw. aktuell gemessenen oder geschätzten) Maß an Vibration im Fahrzeug 100 entsprechen, insbesondere wenn keine wesentliche Veränderung dieses Maßes vorausermittelt wurde.

Das Variieren der haptischen Lenkradsignalisierung kann ein Umschalten von mehreren Intensitätsstufen der Lenkradsignalisierung umfassen. Bevorzugt können die Parameter der haptischen Lenkradsignalisierung weitgehend zeitkontinuierlich und/oder in kleinen (kaum wahrnehmbaren) (Parameter-)Stufen an die zu erwartenden Vibrationen im Fahrzeug 100 angepasst werden.

Das Maß an Vibrationen im Fahrzeug 100 kann abhängig von einem Maß der Fahrbahnunebenheiten in der Umgebung des Fahrzeugs 100, insbesondere in einem Fahrbahnabschnitt auf der voraussichtlichen Fahrzeugtrajektorie des Fahrzeugs 100, ermittelt werden. Besonders bevorzugt bezieht sich dabei das Maß an Unebenheiten auf einen Fahrbahnabschnitt, der im Zeitintervall befahren wird, an dem auch die haptische Lenkradsignalisierung ausgegeben wird oder noch ausgegeben werden soll.

Ein Maß von Fahrbahnunebenheiten kann z.B. ermittelt werden, basierend auf: Information über die Fahrbahnqualität aus einer Navigationskarte; und/oder Sensordaten von zumindest einem Fahrzeugsensor, insbesondere einem Frontkamerasystem des Fahrzeugs 100; und/oder Sensordaten zumindest eines vertikaldynamischen Sensors (zur Erfassung von senkrechten Einwirkungen, Neigen, Wanken, etc. auf das Fahrzeug 100); und/oder Sensordaten zumindest eines Inertialsensors (Beschleunigungssensors) des Fahrzeugs 100; und/oder Sensordaten von einem Lenkradsensor des Fahrzeugs 100; und/oder erfassten Krafteinflüssen oder Frequenzwerten der Einflüsse auf ein Servolenkungssystem des Fahrzeugs 100.

Besonders bevorzugt ist dabei ein kombinierter Ansatz, bei dem ein aktuelles Maß an Vibrationen im Fahrzeug 100, insbesondere sensorisch, ermittelt wird, und eine Information eines Umfeld-erfassenden Sensors über eine (noch kommende oder erwartete) Veränderung des Maßes, das die Fahrbahnunebenheiten in der geplanten Fahrzeugtrajektorie repräsentiert, berücksichtigt wird.

Wie bereits oben dargelegt, können insbesondere eine Amplitude und/oder ein Frequenzwert der haptischen Lenkradsignalisierung variiert werden. Besonders bevorzugt kann die haptische Signalisierung anhand beider Parameter Amplitude und Frequenz variiert werden. Dabei kann die haptische Lenkradsignalisierung zwei oder mehr Frequenzkomponenten oder ein Frequenzmuster umfassen. Die Frequenzwerte können dabei Spektralparameter umfassen, z.B. bei zwei oder mehreren Frequenzen.

Die haptische Lenkradsignalisierung, insbesondere eine Frequenz der haptischen Lenkradsignalisierung, kann abhängig von der aktuellen oder für die nahe Zukunft vorausgesagten Fahrzeuggeschwindigkeit variiert werden. Eine Vibrationsfrequenz des Lenkrads 102, die durch das Befahren einer Fahrbahn verursacht wird, hängt typischerweise von der Fahrgeschwindigkeit ab. Als Folge daraus hängt auch die Qualität der Wahrnehmung der zusätzlichen künstlich erzeugten Vibration der haptischen Signalisierung von der Fahrzeuggeschwindigkeit ab. Bei einer langsamen Fahrt werden typischerweise relativ niedrige Vibrationsfrequenzen (bei relativ niedrigen Frequenzen) generiert, wobei die Vibrationsfrequenzen typischerweise mit steigenden Fahrgeschwindigkeiten steigen.

Die Vibration der haptischen Signalisierung kann derart gewählt bzw. variiert werden, dass die Vibration der haptischen Signalisierung möglichst wenig durch die durch die Fahrbahnunebenheiten bei der aktuellen Fahrgeschwindigkeit verursachten Vibration gestört, insbesondere überlagert, wird. Folglich kann die haptische Signalisierung von der Fahrgeschwindigkeit des Fahrzeugs abhängen, und in Abhängigkeit von der Fahrgeschwindigkeit angepasst werden.

Ein oder mehrere Frequenzen der haptischen Lenkradsignalisierung können derart gewählt werden, dass ein Maskierungseffekt der Wahrnehmung der haptischen Lenkradsignalisierung durch Vibrationen des Fahrzeugs 100 vermieden wird. Dabei können die Frequenzwerte, die ähnlich zu den Frequenzwerten der Vibrationen des Fahrzeugs 100 sind, gemieden werden. Des Weiteren können abweichende Frequenzwerte bevorzugt werden. So können Interferenzen bzw. ein "Übersprechen" zwischen den Fahrzeug-Vibrationen und der haptischen Lenkradsignalisierung in Bezug auf die menschliche Wahrnehmung vermieden werden.

Die (z.B. für die nächsten Sekunden) vorausgesagte Fahrzeuggeschwindigkeit des Fahrzeugs 100 kann aus der aktuellen Geschwindigkeit und Stellungen von Fahr- und/oder Bremspedalen des Fahrzeugs 100 ermittelt werden.

Die Intensität der Lenkradvibration für die haptische Lenkradsignalisierung kann im Wesentlichen proportional zu einem Produkt aus einem Maß an Fahrbahnunebenheiten und einem Geschwindigkeitswert sein, der die Fahrgeschwindigkeit des Fahrzeugs 100 anzeigt. Beispielsweise kann eine relativ niedrige Rauigkeit der Fahrbahn bei einer niedrigen Geschwindigkeit zu einer relativ niedrigen Intensität der Lenkradsignalisierung führen. Des Weiteren können eine relativ starke Rauigkeit bei einer relativ niedrige Geschwindigkeit bzw. eine relativ niedrige Rauigkeit bei einer relativ hohen Geschwindigkeit zu einer mittleren Intensität der Lenkradsignalisierung führen. Außerdem kann eine relativ starke Rauigkeit der Fahrbahn bei einer relativ hohen Geschwindigkeit zu einer relativ starken Intensität der Lenkradsignalisierung führen.

Diese Adaptivität der Intensität der Lenkradsignalisierung kann von einer von einem Nutzer gewählten Intensitäts-Einstellung abhängig sein. Dabei kann die Intensitäts-Einstellung (Intensitätsstufe) als ein weiterer multiplikativer Faktor angewandt werden.

Ein aktuelles Maß an Vibrationen im Fahrzeug 100 kann insbesondere sensorisch ermittelt werden. Dabei kann eine Information eines Umfeld-erfassenden Sensors über eine Veränderung der Vibrationen im Fahrzeug 100, insbesondere wegen veränderter Fahrbahnunebenheiten in der Fahrzeugumgebung in Richtung der geplanten Fahrzeugtrajektorie, berücksichtigt werden. Ausgehend von einem für den aktuellen Zeitpunkt ermittelten Maß von Vibrationen im Fahrzeug und ausgehende von einem Faktor der Veränderung, der die Vibrationen im Fahrzeug beeinflusst (z.B. der Straßenrauigkeit im Zeitintervall, in dem eine Ausgabe einer haptischen Lenkradsignalisierung (voraussichtlich) erfolgen wird), kann zuverlässig ein Maß der dann vorherrschenden Vibrationen im Fahrzeug 100 geschätzt werden.

Die haptische Lenkradsignalisierung, insbesondere eine Amplitude und/oder ein Frequenzwert der haptischen Lenkradsignalisierung, kann abhängig von einer Lautstärke und/oder einem Frequenzwert einer Sound-Anlage des Fahrzeugs oder von einem von einem Innenraum-Mikrofon gemessenen Sound-Wert variiert werden. Besonders bevorzugt werden dabei die Amplituden bzw. Pegel niedriger Frequenzwerte (50 Hz oder weniger, 100 Hz oder weniger, 200 Hz oder wenig) und insbesondere in einem Frequenzbereich von ca. 5 - 35 Hz berücksichtigt.

Zumindest ein Innenraum-Mikrofon kann die Einflüsse der Sound-Anlage und/oder die Einflüsse von anderen Insassen auf die Vibrationen im Fahrzeug 100 erfassen. Das Innenraum-Mikrofon kann einem (in vielen Fahrzeugen vorhandenes oder mitgeführtes) Freisprechmikrofon und/oder Mikrofon zur Sprachsteuerung entsprechen.

Das Verfahren 200 kann weiter umfassen, das Ermitteln eines Zeitintervalls in der nahen Zukunft, an dem zumindest eine haptische Lenkradsignalisierung ausgegeben wird. Außerdem kann das Verfahren 200 umfassen, das Ermitteln von einer Amplitude und/oder von Frequenzwerten von ein oder mehreren Vibrationen im Fahrzeug 100, die zumindest teilweise im selben Zeitintervall erfolgen. Außerdem kann das Verfahren 200 umfassen, das Variieren von einer Amplitude und/oder einem Frequenzwert der haptischen Signalisierung, die zumindest teilweise in dem Zeitintervall erfolgen soll. Ein Zeitintervall kann dabei auch durch einen Zeitpunkt repräsentiert werden.

Die haptische Signalisierung kann derart variiert werden, dass die Wahrnehmbarkeit der ausgegebenen haptischen Signalisierung die haptische Wahrnehmungsschwelle eines Menschen um ein vorgegebenes Maß überschreitet. Alternativ oder ergänzend kann die haptische Signalisierung derart variiert werden, dass die Wahrnehmbarkeit der ausgegebenen haptischen Lenkradsignalisierung eine vorgegebene Störschwelle eines Menschen, insbesondere an der Wahrnehmungsposition eines anderen Insassen (z.B. Beifahrers) des Fahrzeugs 100, um ein vorgegebenes Maß unterscheitet. Dabei kann die Wahrnehmbarkeit einer vorausermittelten Wahrnehmbarkeit zum Zeitintervall der Ausgabe der haptischen Lenkradsignalisierung entsprechen.

Das Variieren der haptischen Lenkradsignalisierung kann einer Zeitkurve folgen, die von der Zeitkurve anhängig ist, mit der sich die Vibrationen im Fahrzeug 100 verändern. Insbesondere kann ein Verlauf von Amplitude und/oder Frequenzwert der haptischen Lenkradsignalisierung nach einer zeitlichen Abhängigkeit (Kurve) variiert werden, die von einer zeitlichen Abhängigkeit abhängig ist, die den zeitlichen Verlauf von Amplitude und/oder Frequenzwert der Vibrationen im Fahrzeug repräsentiert.

Durch das in diesem Dokument beschriebene Verfahren 200 kann gewährleistet werden, dass eine haptische Lenkradsignalisierung auch in unterschiedlichen Fahrsituationen verlässlich wahrnehmbar und nicht störend ist. Insbesondere können durch das beschriebene Verfahren 200 haptische Lenkradsignalisierungen generiert werden, die verlässlich von anderen Fahrzeugvibrationen unterscheidbar sind. Dabei können weiterhin Nutzer-abhängige Einstellungen der Intensität der haptischen Lenkradsignalisierung berücksichtigt werden.

Die vorliegende Erfindung ist nicht auf die gezeigten Ausführungsbeispiele beschränkt. Insbesondere ist zu beachten, dass die Beschreibung und die Figuren nur das Prinzip der vorgeschlagenen Verfahren, Vorrichtungen und Systeme veranschaulichen sollen.

## Patentansprüche

1. Verfahren (200) zur Erzeugung einer haptischen Signalisierung an einem manuellen Steuermittel (102) eines Fahrzeugs (100), wobei das Verfahren (200) umfasst,
- Ermitteln (201) von Vibrationsinformation (105), die ein Maß von Vibrationen im Fahrzeug (100) anzeigt; und
- Erzeugen (202) einer haptischen Signalisierung an dem manuellen Steuermittel (102) des Fahrzeugs (100) in Abhängigkeit von der Vibrationsinformation (105); **dadurch gekennzeichnet, dass** die haptische Signalisierung derart erzeugt wird, dass
- die haptische Signalisierung eine erste Wahrnehmbarkeitsschwelle für einen Fahrer des Fahrzeugs (100) überschreitet, der das manuelle Steuermittel (102) berührt; wobei die erste Wahrnehmbarkeitsschwelle von dem Maß der Vibrationen im Fahrzeug (100) abhängt; und/oder
- die haptische Signalisierung eine zweite Wahrnehmbarkeitsschwelle für einen weiteren Insassen des Fahrzeugs (100) unterschreitet, der das manuelle Steuermittel (102) nicht berührt; wobei die zweite Wahrnehmbarkeitsschwelle von dem Maß der Vibrationen im Fahrzeug (100) abhängt; und/oder
- die haptische Signalisierung eine Störschwelle für den Fahrer des Fahrzeugs (100) unterscheitet, bei der die haptische Signalisierung als wesentlich unkomfortabel wahrgenommen wird; wobei die Störschwelle von dem Maß der Vibrationen im Fahrzeug (100) abhängt.

2. Verfahren (200) gemäß Anspruch 1, wobei die Vibrationsinformation (105) von Unebenheiten einer von dem Fahrzeug (100) befahrenen Fahrbahn abhängig ist.

3. Verfahren (200) gemäß einem der vorhergehenden Ansprüche, wobei die Vibrationsinformation (105) ermittelt wird, basierend auf
- Information über die Qualität einer Fahrbahn aus einer digitalen Navigationskarte;
- Sensordaten eines Umfeldsensors des Fahrzeugs (100), der eingerichtet ist, eine von dem Fahrzeug (100) befahrenen Fahrbahn zu erfassen;
- Sensordaten eines vertikaldynamischen Sensors des Fahrzeugs (100);
- Sensordaten eines Inertialsensors und/oder Beschleunigungssensors des Fahrzeugs (100);
- einer Kenngröße, die einen Parameter eines Antriebssystems des Fahrzeugs (100), insbesondere eine Drehzahl oder einen aktuellen Getriebegang, repräsentiert; und/oder
- Sensordaten eines Bewegungs- und/oder Kraftsensors an dem manuellen Steuermittel (102) des Fahrzeugs (100).

4. Verfahren (200) gemäß einem der vorhergehenden Ansprüche, wobei
- die haptische Signalisierung ein oder mehrere Frequenzkomponenten mit einer jeweiligen Amplitude und einer jeweiligen Frequenz umfasst; und
- die Amplitude und/oder Frequenz der ein oder mehreren Frequenzkomponenten der haptischen Signalisierung in Abhängigkeit von der Vibrationsinformation (105) angepasst werden.

5. Verfahren (200) gemäß einem der vorhergehenden Ansprüche, wobei
- das Verfahren (200) umfasst, Ermitteln einer aktuellen und/oder prädizierten Fahrgeschwindigkeit des Fahrzeugs (100); und
- die Vibrationsinformation (105) von der aktuellen und/oder prädizierten Fahrgeschwindigkeit des Fahrzeugs (100) abhängig ist bzw. die aktuelle und/oder prädizierte Fahrgeschwindigkeit des Fahrzeugs (100) umfasst.

6. Verfahren (200) gemäß Anspruch 5 mit Rückbezug auf Anspruch 2, wobei eine Intensität und/oder Amplitude der haptischen Signalisierung
- mit einem steigenden Maß von Unebenheiten der befahrenen Fahrbahn steigen;
- mit einer steigenden Fahrgeschwindigkeit steigen; und/oder
- mit einem Kombinationswert aus dem Maß von Unebenheiten und der Fahrgeschwindigkeit steigen.

7. Verfahren (200) gemäß einem der vorhergehenden Ansprüche, wobei
- die Vibrationsinformation (105) ein aktuelles Maß von Vibrationen des Fahrzeugs (100) und eine prädizierte zukünftige Veränderung des Maßes von Vibrationen des Fahrzeugs (100) anzeigt; und
- die prädizierte zukünftige Veränderung des Maßes von Vibrationen des Fahrzeugs (100) insbesondere von einer geplanten Trajektorie des Fahrzeugs (100) abhängt.

8. Verfahren (200) gemäß einem der vorhergehenden Ansprüche, wobei die Vibrationsinformation (105) von akustischen Signalen, insbesondere von einem Pegel von akustischen Signalen, in einem Innenraum des Fahrzeugs (100) abhängt.

9. Verfahren (200) gemäß einem der vorhergehenden Ansprüche, wobei
- die haptische Signalisierung in einem vorausliegenden Zeitintervall ausgegeben werden soll; und
- das Ermitteln (201) von Vibrationsinformation (105) umfasst, Ermitteln von Vibrationsinformation (105) zumindest für einen Teil des vorausliegenden Zeitintervalls.

10. Verfahren (200) gemäß einem der vorhergehenden Ansprüche, wobei
- die Vibrationsinformation (105) einen zeitlichen Verlauf einer Amplitude und/oder einer Frequenz von Vibrationen im Fahrzeug (100) anzeigt; und
- ein zeitlicher Verlauf einer Amplitude und/oder einer Frequenz der haptischen Signalisierung in Abhängigkeit von der Vibrationsinformation (105) angepasst wird.

11. Verfahren (200) gemäß einem der vorhergehenden Ansprüche, wobei
- das Verfahren (200) umfasst, Erzeugen zumindest zweier unterschiedlicher haptischen Signalisierungen;
- eine Abhängigkeit der zumindest zwei unterschiedlichen haptischen Signalisierungen von der Vibrationsinformation unterschiedlich ist.

12. Computerprogramm, das eingerichtet ist, um auf einem Prozessor ausgeführt zu werden, und um dadurch das Verfahren (200) gemäß einem der vorhergehenden Ansprüche auszuführen.

13. Vorrichtung (101) für ein Fahrzeug (100), wobei die Vorrichtung (101) eingerichtet ist,
- Vibrationsinformation (105) zu ermitteln, die ein Maß von Vibrationen im Fahrzeug (100) anzeigt; und
- zu veranlassen, dass in Abhängigkeit von der Vibrationsinformation (105) eine haptische Signalisierung an einem manuellen Steuermittel (102) des Fahrzeugs (100) erzeugt wird; **dadurch gekennzeichnet, dass** die haptische Signalisierung derart erzeugt wird, dass
- die haptische Signalisierung eine erste Wahrnehmbarkeitsschwelle für einen Fahrer des Fahrzeugs (100) überschreitet, der das manuelle Steuermittel (102) berührt; wobei die erste Wahrnehmbarkeitsschwelle von dem Maß der Vibrationen im Fahrzeug (100) abhängt; und/oder
- die haptische Signalisierung eine zweite Wahrnehmbarkeitsschwelle für einen weiteren Insassen des Fahrzeugs (100) unterschreitet, der das manuelle Steuermittel (102) nicht berührt; wobei die zweite Wahrnehmbarkeitsschwelle von dem Maß der Vibrationen im Fahrzeug (100) abhängt; und/oder
- die haptische Signalisierung eine Störschwelle für den Fahrer des Fahrzeugs (100) unterscheitet, bei der die haptische Signalisierung als wesentlich unkomfortabel wahrgenommen wird; wobei die Störschwelle von dem Maß der Vibrationen im Fahrzeug (100) abhängt.

## Claims

1. Method (200) for producing haptic signalling on a manual control means (102) of a vehicle (100), wherein the method (200) comprises
- determining (201) vibration information (105) indicating a degree of vibrations in the vehicle (100); and
- producing (202) haptic signalling on the manual control means (102) of the vehicle (100) on the basis of the vibration information (105); **characterized in that** the haptic signalling is produced such that
- the haptic signalling exceeds a first perceptibility threshold for a driver of the vehicle (100) who is touching the manual control means (102); wherein the first perceptibility threshold depends on the degree of vibrations in the vehicle (100); and/or
- the haptic signalling undershoots a second perceptibility threshold for a further occupant of the vehicle (100) who is not touching the manual control means (102); wherein the second perceptibility threshold depends on the degree of vibrations in the vehicle (100); and/or
- the haptic signalling undershoots an interference threshold for the driver of the vehicle (100), at which the haptic signalling is perceived to be substantially uncomfortable;
wherein the interference threshold depends on the degree of vibrations in the vehicle (100).

2. Method (200) according to Claim 1, wherein the vibration information (105) is dependent on unevennesses of a road travelled on by the vehicle (100) .

3. Method (200) according to one of the preceding claims, wherein the vibration information (105) is determined on the basis of
- information relating to the quality of a road from a digital navigation map;
- sensor data from an environmental sensor of the vehicle (100), which sensor is configured to capture a road travelled on by the vehicle (100);
- sensor data from a vertical dynamic sensor of the vehicle (100);
- sensor data from an inertial sensor and/or acceleration sensor of the vehicle (100);
- a characteristic variable representing a parameter of a drive system of the vehicle (100), in particular a speed or a current gear; and/or
- sensor data from a motion and/or force sensor on the manual control means (102) of the vehicle (100) .

4. Method (200) according to one of the preceding claims, wherein
- the haptic signalling comprises one or more frequency components with a respective amplitude and a respective frequency; and
- the amplitude and/or frequency of the one or more frequency components of the haptic signalling is/are adapted on the basis of the vibration information (105).

5. Method (200) according to one of the preceding claims, wherein
- the method (200) comprises determining a current and/or predicted driving speed of the vehicle (100); and
- the vibration information (105) is dependent on the current and/or predicted driving speed of the vehicle (100) or comprises the current and/or predicted driving speed of the vehicle (100).

6. Method (200) according to Claim 5 with reference back to Claim 2, wherein an intensity and/or an amplitude of the haptic signalling
- increase(s) with an increasing degree of unevennesses of the road travelled on;
- increase(s) with an increasing driving speed; and/or
- increase(s) with a combination value of the degree of unevennesses and the driving speed.

7. Method (200) according to one of the preceding claims, wherein
- the vibration information (105) indicates a current degree of vibrations of the vehicle (100) and a predicted future change in the degree of vibrations of the vehicle (100); and
- the predicted future change in the degree of vibrations of the vehicle (100) depends, in particular, on a planned trajectory of the vehicle (100).

8. Method (200) according to one of the preceding claims, wherein the vibration information (105) depends on acoustic signals, in particular on a level of acoustic signals, in an interior of the vehicle (100).

9. Method (200) according to one of the preceding claims, wherein
- the haptic signalling is intended to be output in an upcoming interval of time; and
- the determination (201) of vibration information (105) comprises determining vibration information (105) at least for part of the upcoming interval of time.

10. Method (200) according to one of the preceding claims, wherein
- the vibration information (105) indicates a temporal profile of an amplitude and/or a frequency of vibrations in the vehicle (100); and
- a temporal profile of an amplitude and/or a frequency of the haptic signalling is adapted on the basis of the vibration information (105).

11. Method (200) according to one of the preceding claims, wherein
- the method (200) comprises generating at least two different forms of haptic signalling;
- a dependence of the at least two different forms of haptic signalling on the vibration information is different.

12. Computer program configured to be executed on a processor and to thereby carry out the method (200) according to one of the preceding claims.

13. Apparatus (101) for a vehicle (100), wherein the apparatus (101) is configured
- to determine vibration information (105) indicating a degree of vibrations in the vehicle (100); and
- to cause haptic signalling to be produced on a manual control means (102) of the vehicle (100) on the basis of the vibration information (105); **characterized in that** the haptic signalling is produced such that
- the haptic signalling exceeds a first perceptibility threshold for a driver of the vehicle (100) who is touching the manual control means (102); wherein the first perceptibility threshold depends on the degree of vibrations in the vehicle (100); and/or
- the haptic signalling undershoots a second perceptibility threshold for a further occupant of the vehicle (100) who is not touching the manual control means (102); wherein the second perceptibility threshold depends on the degree of vibrations in the vehicle (100); and/or
- the haptic signalling undershoots an interference threshold for the driver of the vehicle (100) at which the haptic signalling is perceived to be substantially uncomfortable; wherein the interference threshold depends on the degree of vibrations in the vehicle (100).

## Revendications

1. Procédé (200) pour générer une signalisation haptique au niveau d'un moyen de commande (102) manuel d'un véhicule (100), le procédé (200) comprenant :
- la détermination (201) d'informations de vibrations (105), qui indiquent une mesure des vibrations dans le véhicule (100) ; et
- la génération (202) d'une signalisation haptique au niveau du moyen de commande (102) manuel du véhicule (100) en fonction des informations de vibrations (105) ; **caractérisé en ce que** la signalisation haptique est générée de telle sorte que
- la signalisation haptique dépasse un premier seuil de perceptibilité pour un conducteur du véhicule (100) qui touche le moyen de commande (102) manuel ; le premier seuil de perceptibilité étant dépendant de la mesure des vibrations dans le véhicule (100) ; et/ou
- la signalisation haptique franchit vers le bas un deuxième seuil de perceptibilité pour un occupant supplémentaire du véhicule (100) qui ne touche pas le moyen de commande (102) manuel ; le deuxième seuil de perceptibilité étant dépendant de la mesure des vibrations dans le véhicule (100) ; et/ou
- la signalisation haptique franchit vers le bas un seuil de dérangement pour le conducteur du véhicule (100), auquel la signalisation haptique est perçue comme sensiblement inconfortable ; le seuil de dérangement étant dépendant de la mesure des vibrations dans le véhicule (100).

2. Procédé (200) selon la revendication 1, les informations de vibrations (105) étant dépendantes d'irrégularités d'une voie de circulation sur laquelle circule le véhicule (100).

3. Procédé (200) selon l'une des revendications précédentes, les informations de vibrations (105) étant déterminées en se basant sur
- des informations à propos de la qualité d'une voie de circulation issues d'une carte de navigation numérique ;
- des données de capteur d'un capteur d'environnement du véhicule (100), lequel est conçu pour détecter une voie de circulation sur laquelle circule le véhicule (100) ;
- des données de capteur d'un capteur de dynamique verticale du véhicule (100) ;
- des données de capteur d'un capteur inertiel et/ou d'un capteur d'accélération du véhicule (100) ;
- une grandeur caractéristique qui représente un paramètre d'un système de transmission du véhicule (100), notamment une vitesse de rotation ou un rapport de boîte de vitesses actuel, et/ou
- des données de capteur d'un capteur de mouvement et/ou de force au niveau du moyen de commande (102) manuel du véhicule (100).

4. Procédé (200) selon l'une des revendications précédentes,
- la signalisation haptique comprenant une ou plusieurs composantes de fréquence ayant une amplitude respective et une fréquence respective ; et
- l'amplitude et/ou la fréquence de l'une ou des plusieurs composantes de fréquence de la signalisation haptique étant adaptées en fonction des informations de vibrations (105).

5. Procédé (200) selon l'une des revendications précédentes,
- le procédé (200) comprenant la détermination d'une vitesse de déplacement actuelle et/ou prédite du véhicule (100) ; et
- les informations de vibrations (105) étant dépendantes de la vitesse de déplacement actuelle et/ou prédite du véhicule (100) ou comprenant la vitesse de déplacement actuelle et/ou prédite du véhicule (100).

6. Procédé (200) selon la revendication 5 en référence à la revendication 2, une intensité et/ou une amplitude de la signalisation haptique
- augmentant avec une mesure croissante d'irrégularités sur la voie de circulation franchie ;
- augmentant avec une augmentation de la vitesse de déplacement ; et/ou
- augmentant avec une valeur combinée de la mesure des irrégularités et de la vitesse de déplacement.

7. Procédé (200) selon l'une des revendications précédentes,
- les informations de vibrations (105) indiquant une mesure actuelle des vibrations du véhicule (100) et une variation future prédite de la mesure des vibrations du véhicule (100) ; et
- la variation future prédite de la mesure des vibrations du véhicule (100) étant dépendante notamment d'une trajectoire prévue du véhicule (100).

8. Procédé (200) selon l'une des revendications précédentes, les informations de vibrations (105) étant dépendantes de signaux acoustiques, notamment d'un niveau de signaux acoustiques, dans un habitacle du véhicule (100) .

9. Procédé (200) selon l'une des revendications précédentes,
- la signalisation haptique devant être délivrée dans un intervalle de temps à venir ; et
- la détermination (201) d'informations de vibrations (105) comprenant la détermination d'informations de vibrations (105) au moins pendant une partie de l'intervalle de temps à venir.

10. Procédé (200) selon l'une des revendications précédentes,
- les informations de vibrations (105) indiquant une évolution dans le temps d'une amplitude et/ou d'une fréquence de vibrations dans le véhicule (100) ; et
- une évolution dans le temps d'une amplitude et/ou d'une fréquence de la signalisation haptique étant adaptée en fonction des informations de vibrations (105).

11. Procédé (200) selon l'une des revendications précédentes,
- le procédé (200) comprenant la génération d'au moins deux signalisations haptiques différentes ;
- une dépendance des au moins deux signalisations haptiques différentes aux informations de vibrations étant différente.

12. Programme informatique, qui est conçu pour être exécuté sur un processeur afin de mettre ainsi en œuvre un procédé (200) selon l'une des revendications précédentes.

13. Dispositif (101) pour un véhicule (100), le dispositif (101) étant conçu pour
- déterminer des informations de vibrations (105), qui indiquent une mesure des vibrations dans le véhicule (100) ; et
- provoquer, en fonction des informations de vibrations (105), la génération d'une signalisation haptique au niveau d'un moyen de commande (102) manuel du véhicule (100) ; **caractérisé en ce que** la signalisation haptique est générée de telle sorte que
- la signalisation haptique dépasse un premier seuil de perceptibilité pour un conducteur du véhicule (100) qui touche le moyen de commande (102) manuel ; le premier seuil de perceptibilité étant dépendant de la mesure des vibrations dans le véhicule (100) ; et/ou
- la signalisation haptique franchit vers le bas un deuxième seuil de perceptibilité pour un occupant supplémentaire du véhicule (100) qui ne touche pas le moyen de commande (102) manuel ; le deuxième seuil de perceptibilité étant dépendant de la mesure des vibrations dans le véhicule (100) ; et/ou
- la signalisation haptique franchit vers le bas un seuil de dérangement pour le conducteur du véhicule (100), auquel la signalisation haptique est perçue comme sensiblement inconfortable ; le seuil de dérangement étant dépendant de la mesure des vibrations dans le véhicule (100).
